# EUROPÄISCHE PATENTSCHRIFT

(11) **EP 1 899 101 B1**
(45) Veröffentlichungstag und Bekanntmachung des Hinweises auf die Patenterteilung: **26.11.2008**
(21) Anmeldenummer: 06743069.4
(22) Anmeldetag: 26.05.2006
(51) Int. Cl.: B23D 77/00, B23B 31/11

(54) **MASCHINENWERKZEUG**
MACHINE TOOL
OUTIL DE MACHINE

(30) Priorität: 05.07.2005 DE 102005031683
(43) Veröffentlichungstag der Anmeldung: 19.03.2008
(73) Patentinhaber: Dihart AG, CH-4657 Dulliken (CH)
(72) Erfinder: BÜTTIKER, Otto, CH-4617 Gunzgen (CH); EIGENMANN, Roman, CH-4466 Ormalingen (CH); KRUSZYNSKI,Jacek, 70190 Stuttgart (DE)
(74) Vertreter: Wolf, Eckhard
(86) Internationale Anmeldenummer: PCT/EP2006/005042
(87) Internationale Veröffentlichungsnummer: WO 2007/003248

(56) Entgegenhaltungen:
- WO-A-01/64381
- WO-A-03/051564
- DE-A1- 4 330 826
- DE-A1- 10 224 228
- DE-U1- 20 306 151
- DE-U1- 29 919 851
- US-A- 2 383 688
- US-A- 3 320 833

## Beschreibung

Die Erfindung betrifft ein Maschinenwerkzeug, insbesondere eine Maschinenreibahle, gemäß den Oberbegriffen der unabhängigen Ansprüche 1 und 17. Ein solches Werkzeug ist aus der US-A-2 383 688 bekannt.

Als Maschinenreibahlen ausgebildete Maschinenwerkzeuge dieser Art werden zur Feinbearbeitung zylindrischer Bohrungen mit dem Ziel hoher Maß-und Formgenauigkeit eingesetzt. Eine wichtige Eigenschaft einer Maschinenreibahle ist die Koaxialität des als Reibkopf ausgebildeten Wechselschneidkopfes in Bezug auf die Drehachse. Bei einer bekannten Maschinenreibahle (WO 01/64381) sorgt der mit einem konischen Ansatz in eine komplementäre stirnseitige Aufnahme des Grundkörpers mittels eines Zugankers einspannbare Wechselschneidkopf für die notwendige Koaxialität. Es hat sich allerdings gezeigt, dass vor allem bei kleinen Baugrößen eine Drehmitnahme über einen konischen Ansatz nicht ohne weiteres gewährleistet ist. Um diesen Nachteil zu vermeiden, wurde bereits vorgeschlagen (DE-102 24 228 A1), dass der Zuganker eine durch eine achszentrale Mehrkantöffnung des Wechselschneidkopfs hindurchgreifende komplementäre Mehrkantpartie aufweist. Dadurch wird erreicht, dass der Zuganker in Bezug auf den Reibkopf in Umfangsrichtung exakt positionierbar ist und eine gute Drehmitnahme gewährleistet ist. Als nachteilig wird jedoch empfunden, dass der in seiner Drehlage fixierte Zuganker nicht allein von der Stirnseite her in den Grundkörper eingedreht werden kann. Es bedarf hierzu vielmehr einer von der Rückseite des Grundkörpers her einzudrehenden, mit dem Zuganker zu verbindenden Zugmutter.

Ausgehend hiervon liegt der Erfindung die Aufgabe zugrunde, das bekannte Maschinenwerkzeug der eingangs angegebenen Art dahingehend zu verbessern, dass die Montage des Wechselschneidkopfs am Grundkörper erleichtert und dennoch eine gute Drehmitnahme gewährleistet wird.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung besteht vor allem darin, dass der Ansatz des Wechselschneidkopfs eine durch eine achszentrale grundkörperfeste Mehrkantöffnung hindurchgreifende, hierzu komplementäre Mehrkantpartie aufweist, und dass die Spannschraube in ein zentrales grundkörperfestes Innengewinde eingedreht ist.

Zur Verbesserung der Zentrierung hat es sich als vorteilhaft erwiesen, wenn der Ansatz zusätzlich eine an die Mehrkantpartie anschließende, in eine grundkörperfeste Konusöffnung eingreifende, hierzu komplementäre Außenkonuspartie aufweist, wobei die Außenkonuspartie über eine Ringstufe von der Mehrkantpartie und die Konusöffnung über eine zur genannten Ringstufe komplementäre Ringstufe von der Mehrkantöffnung getrennt sind.

Gemäß der Erfindung weist der Grundkörper einen eine stirnseitige Aufnahme für den Wechselschneidkopf sowie das Innengewinde, die Mehrkantöffnung und/oder die Konusöffnung enthaltenden Funktionseinsatz auf. Der Funktionseinsatz ist vorzugsweise starr mit dem Grundkörper verbunden, vorzugsweise in dessen Aufnahme eingeschrumpft oder eingeschraubt. Der Funktionseinsatz kann mit dem Grundkörper auch materialschlüssig verbunden, vorzugsweise in dessen Aufnahme eingelötet, eingeschweißt oder eingeklebt sein. Vorteilhafterweise enthält der Grundkörper eine achszentrale Passbohrung für einen am Funktionseinsatz über eine Ringschulter achszentral überstehenden Passzapfen. Alternativ hierzu kann der Grundkörper auch eine achszentrale Gewindebohrung für einen am Funktionseinsatz über eine Ringschulter achszentral überstehenden Gewindezapfen aufweisen. Außerdem ist es von Vorteil, wenn der Funktionseinsatz mit seiner Ringschulter gegen eine die Aufnahme begrenzende stirnseitige Ringfläche des Grundkörpers anliegt.

Eine weitere bevorzugte Ausgestaltung der Erfindung sieht vor, dass das Innengewinde für die Spannschraube innerhalb des Pass- oder Gewindezapfens im Funktionseinsatz angeordnet ist, während die Mehrkantöffnung und/oder die Konusöffnung axial außerhalb des Pass- oder Gewindezapfens angeordnet ist. Zum Zwecke einer exakten Positonierung weist das Funktionselement zweckmäßig eine stirnseitige Ringfläche auf, gegen welche der eingespannte Wechselschneidkopf mit einer komplementären Ringschulter anschlägt.

Die Ausgestaltung der Erfindung gemäß dem Anspruch 1 sieht vor, dass der Grundkörper eine vorzugsweise achszentrale Kühlmittelbohrung aufweist, dass das Funktionselement im Bereich des Passzapfens Kühlmittelkanäle begrenzt, die außerhalb des Innengewindes angeordnet sind und mit der grundkörperseitigen Kühlmittelbohrung kommunizieren, dass im Bereich des in das Funktionselement eingreifenden Teils des Wechselschneidkopfs durch den Wechselschneidkopf und/oder die Spannschraube begrenzte Kühlmittelkanäle angeordnet sind, die mit den passzapfenseitigen Kühlmittelkanälen kommunizieren und dass die wechselschneidkopfseitigen Kühlmittelkanäle im Bereich des Schraubkopfs in zu den Schneiden des Wechselschneidkopfes weisende Austrittsöffnungen münden. Damit wird eine der Zerspanung voreilende Benetzung der Bohrungswand ermöglicht und auch bei höchsten Schnittgeschwindigkeiten stets eine ausreichende Schmierung des Werkzeugs gewährleistet. Wenn außerdem die Kühlmittelbohrung und die Kühlmittelkanäle in ihrem Verlauf einen im Wesentlichen konstanten Öffnungsquerschnitt aufweisen, sind die Voraussetzungen für eine Minimalmengenschmierung, bei welcher ein Öl-Luft-Gemisch als Kühlschmiermittel verwendet wird, erfüllt. Eine weitere Verbesserung in dieser Hinsicht wird dadurch erzielt, wenn die Spannschraube mit ihrer vorzugsweise abgerundeten Spitze in eine sich erweiternde Übergangsöffnung zwischen der grundkörperseitigen Kühlmittelbohrung und den passzapfenseitigen Kühlmittelkanälen querschnittsvermindernd eingreift.

Vorteilhafterweise sind die passzapfenseitigen Kühlmittelkanäle als durch den Passzapfen achsparallel hindurchgreifende Bohrungen ausgebildet. Alternativ dazu können die passzapfenseitigen Kühlmittelkanäle auch als einseitig durch die Passbohrungswand begrenzte Axialnuten in der Passzapfenwand ausgebildet sein.

Die Ausgestaltung der Erfindung gemäß dem Anspruch 17 sieht vor, dass der Grundkörper eine achszentrale Kühlmittelbohrung aufweist und dass die Spannschraube einen mit der Kühlmittelbohrung kommunizierenden Zentralkanal aufweist, der im Bereich des Schraubkopfes in mindestens eine Austrittsöffnung mündet. Die Austrittsöffnung ist beispielsweise achszentral im Schraubkopf angeordnet. Eine bevorzugte Ausgestaltung der Erfindung sieht vor, dass mehrere Austrittsöffnungen vorgesehen sind, die über Radialkanäle mit dem Zentralkanal kommunizieren. Die Radialkanäle können dabei durch den Schaft der Spannschraube oder durch den Schraubkopf hindurchgreifen. Sie weisen zweckmäßig zu den Schneiden des Wechselschneidkopfs.

Vorteilhafterweise enthält die Kühlmittelbohrung des Grundkörpers ein mit dem Zentralkanal der Spannschraube kommunizierendes Kühlmittelrohr, das nachträglich in die Kühlmittelbohrung des Grundkörpers eingesetzt wird. Um eine dichte Kühlmittelübergabe zu gewährleisten, schließt die Spannschraube mit ihrem Zentralkanal zweckmäßig über einen Dichtring an die Kühlmittelbohrung oder das Kühlmittelrohr an.

Im Folgenden wird die Erfindung anhand der in der Zeichnung in schematischer Weise dargestellten Ausführungsbeispiele näher erläutert. Es zeigen
- Fig. 1a: bis d eine erste Ausführungsvariante einer Maschinenreibahle in einer verkürzten Seitenansicht, einem Querschnitt, einer Drauf- sicht und einem verkürzten Längsschnitt;

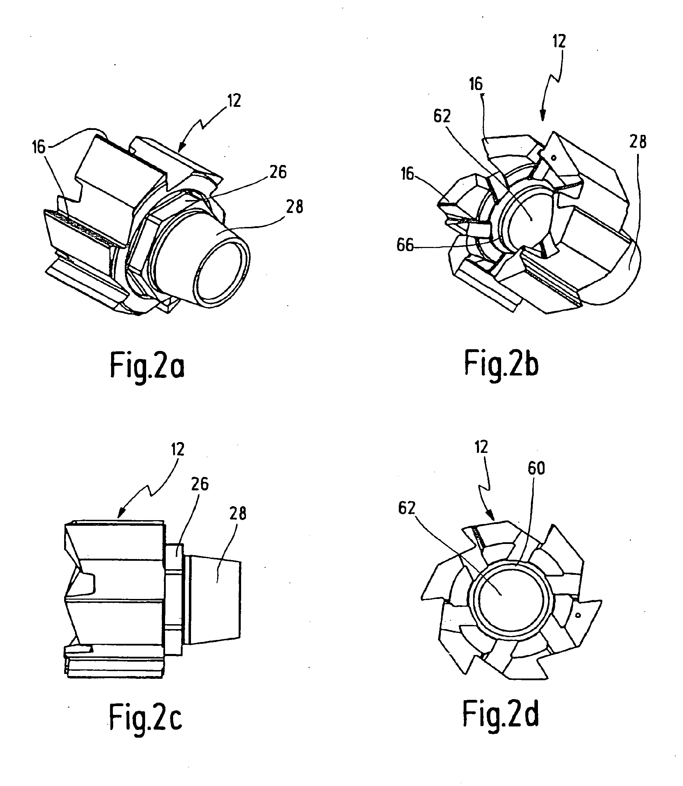

- Fig. 2a: bis d den Wechselschneidkopf der Ausführungsvarianten 1 bis 3 in zwei schaubildlichen Darstellungen, einer Seitenansicht und ei- ner Draufsicht;

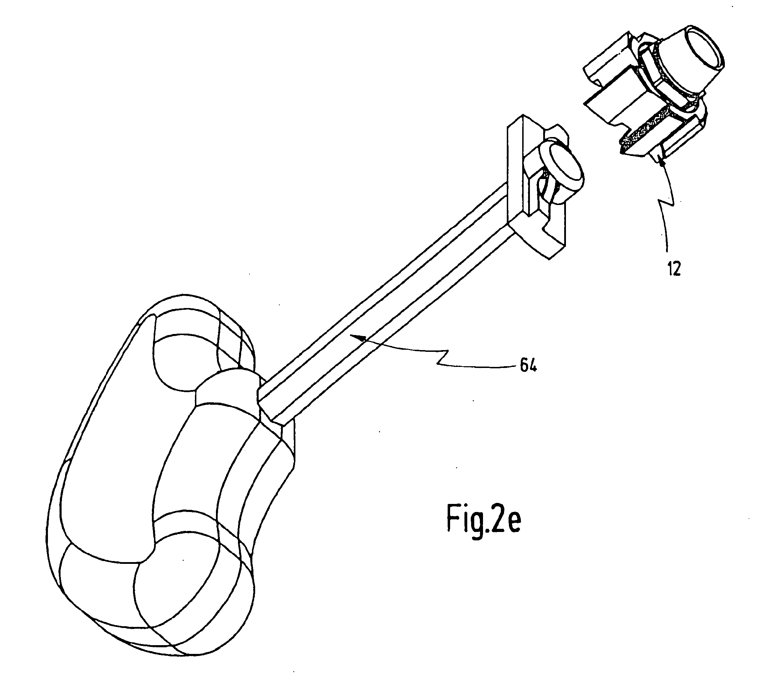

- Fig. 2e: ein Werkzeug für die Montage und Demontage des Wechsel- schneidkopfs in schaubildlicher Darstellung;
- Fig. 3a: bis d eine zweite Ausführungsvariante einer Maschinenreibahle in Darstellungen entsprechend Fig. 1a bis d;
- Fig. 4a: bis d eine dritte Ausführungsvariante einer Maschinenreibahle in Darstellungen entsprechend Fig. 1a bis d;
- Fig. 5a: bis d eine vierte Ausführungsvariante einer Maschinenreibahle in Darstellungen entsprechend Fig. 1a bis d;
- Fig. 6a: bis d eine fünfte Ausführungsvariante einer Maschinenreibahle in Darstellungen entsprechend Fig. 1a bis d;
- Fig. 6e: und f den Wechselschneidkopf der Maschinenreibahle nach Fig. 6a bis d in einer schaubildlichen Darstellung und in Draufsicht;
- Fig. 7a: und b eine sechste Ausführungsvariante einer Maschinenreibahle in schaubildlicher Darstellung und im Längsschnitt;
- Fig. 8a: und b eine siebte Ausführungsvariante einer Maschinenreibahle in einer Draufsicht und in einem Längsschnitt;
- Fig. 9a: bis c eine achte Ausführungsvariante einer Maschinenreibahle in einer Draufsicht, einem Längsschnitt und einem vergrößerten Ausschnitt aus Fig. 9b;
- Fig. 10a: bis c eine neunte Ausführungsvariante einer Maschinenreibahle in Draufsicht, einem Längsschnitt und einem vergrößerten Aus- schnitt aus Fig. 10b.

Die in der Zeichnung dargestellten Maschinenwerkzeuge sind als Maschinenreibahlen ausgebildet. Sie weisen einen als Schaft ausgebildeten Grundkörper 10 und einen stirnseitig über den Grundkörper axial überstehenden, als Reibkopf ausgebildeten Wechselschneidkopf 12 auf, der beispielsweise aus gehärtetem Stahl, Hartmetall, Keramik oder diamantbeschichtetem Schneidstoff besteht. Der Wechselschneidkopf ist in eine stirnseitige grundkörperfeste Aufnahme unter axialer Verspannung spielfrei und koaxial selbstzentrierend einspannbar. Er weist mehrere in Umfangsrichtung im Abstand voneinander angeordnete Schneidzähne 16 auf. Außerdem weist er einen über eine Planfläche 22 axial überstehenden Ansatz 24 auf, der eine durch eine achszentrale grundkörperfeste Mehrkantöffnung 25 hindurchgreifende, hierzu komplementäre Mehrkantpartie 26 sowie eine an die Mehrkantpartie 26 anschließende, in eine grundkörperfeste Konusöffnung 27 eingreifende, hierzu komplementäre Außenkonuspartie 28 aufweist. Die Außenkonuspartie 28 ist über eine Ringstufe 30 von der Mehrkantpartie 26 getrennt, während die Konusöffnung 27 über eine zur genannten Ringstufe 30 komplementäre Ringstufe 32 von der Mehrkantöffnung 25 getrennt ist. Der Wechselschneidkopf 12 ist mit der Mehrkantpartie 26 und der Außenkonuspartie 28 seines Ansatzes 24 drehfest und spielfrei in der Mehrkantöffnung 25 und der Konusöffnung 27 der Aufnahme 14 verankert.

Die Einspannung des Wechselschneidkopfs 12 am Grundkörper 10 erfolgt mittels einer achszentral durch den Wechselschneidkopf 12 hindurchgreifenden Spannschraube 34, die mit ihrem Außengewinde 36 in ein zentrales grundkörperfestes Innengewinde 38 eingedreht ist.

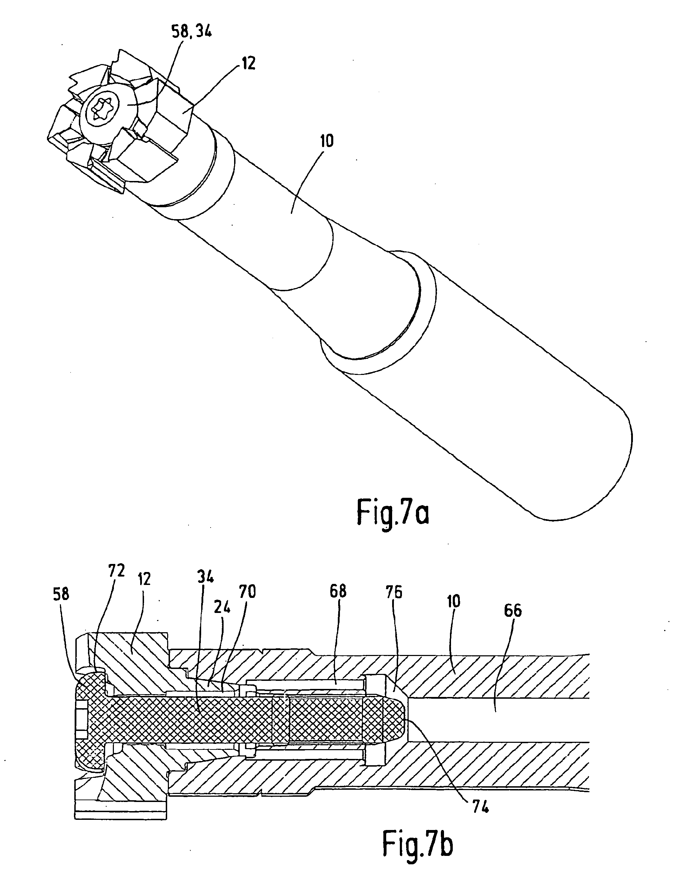

Bei der sechsten Ausführungsvariante gemäß Fig. 7a und b befinden sich das Innengewinde 38 sowie die Aufnahme 14 mit Mehrkantöffnung 25 und Konusöffnung 27 unmittelbar im Grundkörper 10.

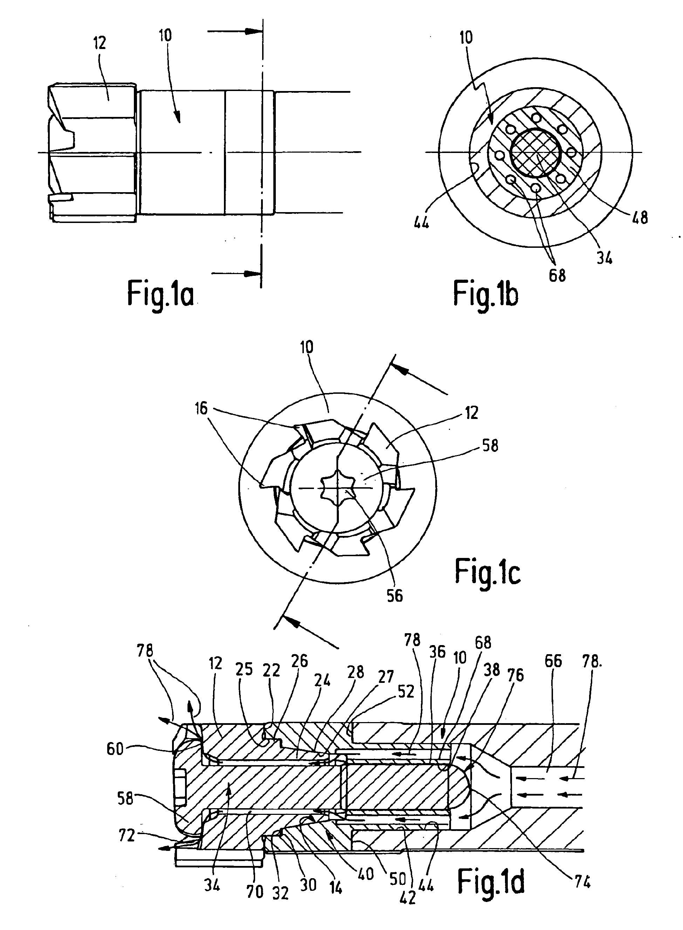

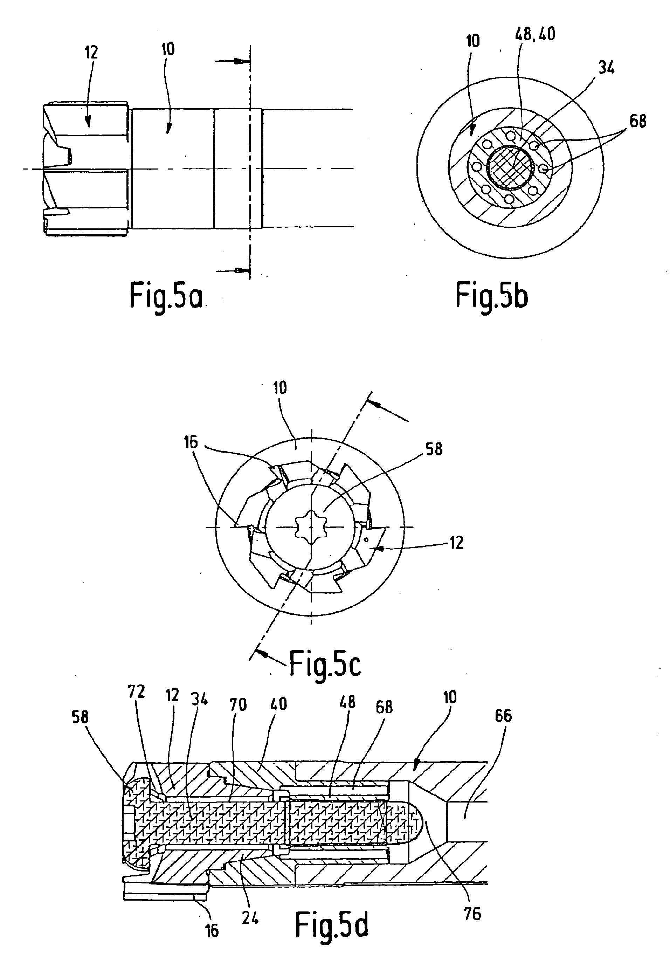

Bei den Ausführungsvarianten nach Fig. 1, 3, 4, 5, 6 und 8 bis 10 weist der Grundkörper 10 einen Funktionseinsatz 40 auf, der in eine stirnseitige Aufnahme 42 des Grundkörpers eingesetzt und über diese mit dem Grundkörper 10 starr verbunden ist. Zu diesem Zweck kann der Funktionseinsatz 40 in die Aufnahme 42 des Grundkörpers 10 eingeschrumpft oder eingeschraubt werden. Er kann auch materialschlüssig mit dem Grundkörper verbunden, beispielsweise in dessen stirnseitige Aufnahme 42 eingelötet, eingeschweißt oder eingeklebt werden. Die Zentrierung erfolgt bei den gezeigten Ausführungsbeispielen über eine im Grundkörper achszentral angeordnete Passbohrung 44, in die der Funktionseinsatz mit einem über die Ringschulter 46 achszentral überstehenden Passzapfen 48 eingreift. Im eingebauten Zustand liegt der Funktionseinsatz 40 mit seiner Ringschulter 46 gegen eine die Aufnahme begrenzende stirnseitige Ringfläche 50 des Grundkörpers 10 an. Bei den Ausführungsvarianten 1 bis 5 befindet sich das Innengewinde 38 für die Spannschraube 34 innerhalb des Passzapfens 48, während die Mehrkantöffnung 25 und die Konusöffnung 27 axial außerhalb des Passzapfens 48 angeordnet sind. Der Funktionseinsatz 40 weist ferner eine stirnseitige Ringfläche 52 auf, gegen welche der eingespannte Wechselschneidkopf 12 mit einer komplementären ringförmigen Planfläche 22 anschlägt.

Die Verspannung des Wechselschneidkopfs 12 mit dem Grundkörper 10 und dessen Funktionseinsatz 40 erfolgt über die zentrale in das Innengewinde 38 eingreifende Spannschraube 34. Die Spannschraube 34 wird mit einem Schraubwerkzeug eingedreht, das in eine Mehrkantöffnung 56 des Schraubenkopfs 58 eingreift. Im eingespannten Zustand liegt der Schraubenkopf 58 gegen eine ringförmige Stirnfläche 60 des Wechselschneidkopfs 12 an, während der Wechselschneidkopf 12 an seiner als Planfläche ausgebildeten Ringschulter 22 gegen die Ringfläche 52 des Funktionseinsatzes 40 bzw. des Grundkörpers 10 angepresst ist.

Beim Auswechseln des Wechselschneidkopfs 12 wird zunächst die Spannschraube 34 aus dem Innengewinde 38 herausgedreht und entnommen. Sodann wird in die stirnseitige Öffnung 62 des Wechselschneidkopfs 12 ein an die Öffnungskontur angepasstes Werkzeug 64 eingesetzt, mit welchen der Wechselschneidkopf 12 aus seiner Klemmverbindung in der Aufnahme 14 des Funktionseinsatzes 40 oder des Grundkörpers 10 (Fig. 7a, b) entfernt werden kann.

Für die Kühlmittelversorgung der Schneidzähne 16 des Wechselschneidkopfs 12 weist der Grundkörper 10 eine achszentrale Kühlmittelbohrung 66 auf. Im weiteren Verlauf befinden sich außerhalb des Innengewindes 38 Kühlmittelkanäle 68, die mit der grundkörperseitigen Kühlmittelbohrung 66 kommunizieren. Bei der sechsten Ausführungsvariante gemäß Fig. 7a und b befinden sich die Kühlmittelkanäle 68 im Grundkörper, während sie im Falle der Ausführungsvarianten 1 bis 5 im Funktionseinsatz 40 im Bereich des Passzapfens 48 angeordnet sind. Die Kühlmittelkanäle 68 kommunizieren im weiteren Verlauf mit Kühlmittelkanälen 70, die im Bereich des in die Aufnahme 14 eingreifenden Teils des Wechselschneidkopfs 12 durch den Wechselschneidkopf 12 und/oder die Spannschraube 34 begrenzt sind und die im Bereich des Schraubkopfes 58 in zu den Schneidzähnen 16 des Wechselschneidkopfs 12 weisende Austrittsöffnungen 72 münden. Die Kühlmittelbohrungen 66 und die Kühlmittelkanäle 68,70 sind so dimensioniert, dass sie in ihrem Verlauf einen im Wesentlichen konstanten Öffnungsquerschnitt aufweisen. Um dies zu erreichen, weist die Spannschraube 34 bei allen Ausführungsvarianten eine abgerundete Spitze 74 auf, mit der sie in eine erweiterte Übergangsöffnung 76 zwischen der grundkörperfesten Kühlmittelbohrung 66 und den Kühlmittelkanälen 68 querschnittsmindernd eingreift. Mit diesen Maßnahmen wird auch bei höchsten Schnittgeschwindigkeiten stets eine ausreichende Schmierung des Werkzeugs gewährleistet. Von besonderer Bedeutung ist dies bei der Minimalmengenschmierung, bei welcher ein Öl-Luft-Gemisch als Kühlschmiermittel verwendet wird.

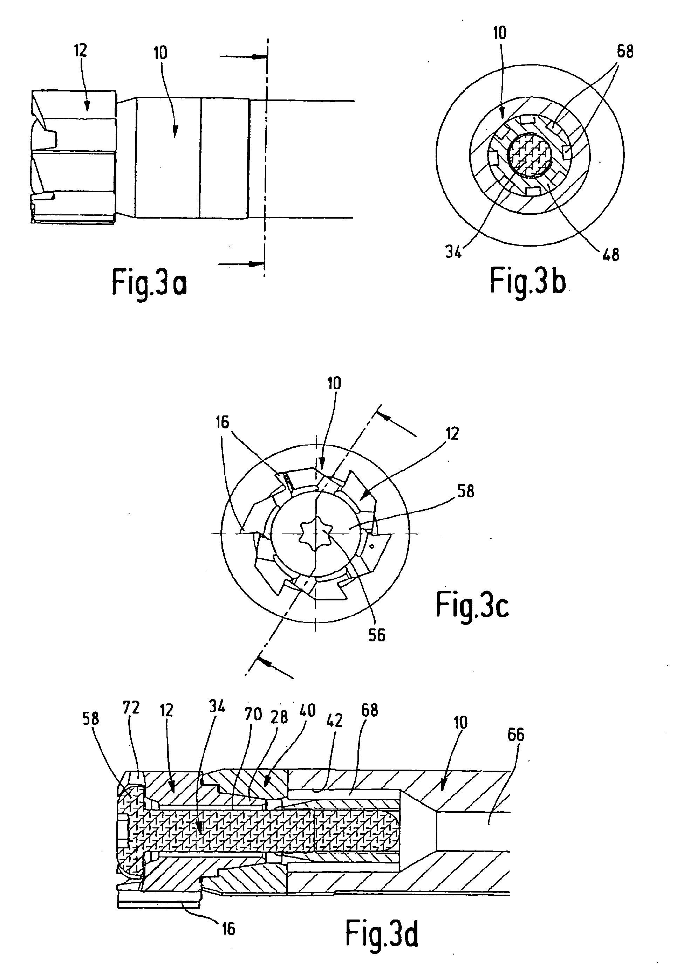

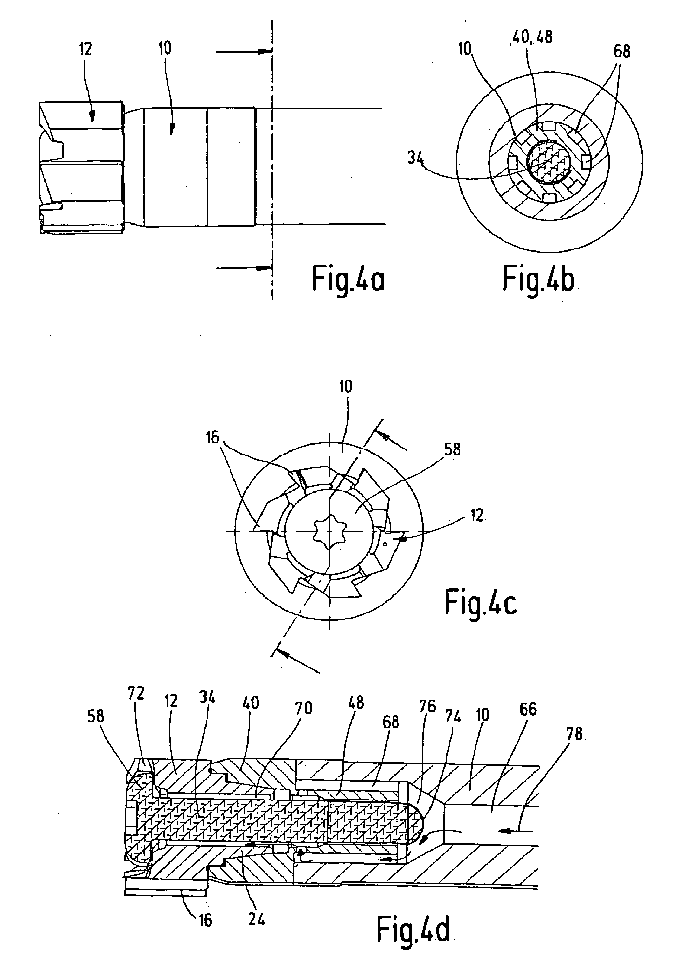

Bei den Ausführungsvarianten 1, 4 und 5 sind die passzapfenseitigen Kühlmittelkanäle 68 als durch den Passzapfen 48 achsparallel hindurchgreifende Bohrungen ausgebildet (vgl. Fig. 1b, 5b und 6b), während sie im Falle der Ausführungsvarianten 2 und 3 als einseitig durch die Passbohrungswand begrenzte Axialnuten in der Passzapfenwand ausgebildet sind (vgl. Fig. 3b und 4b). Bei der sechsten Ausführungsvariante gemäß Fig. 7b befinden sich die Kühlmittelkanäle 68 in Form von Bohrungen unmittelbar im Grundkörper 10.

Bei den Ausführungsvarianten 1 bis 4 gemäß Fig. 1, 3, 4 und 5 ist im Wechselschneidkopf 12 eine zylindrische Bohrung für den Durchtritt der im Schaftbereich Untermaß aufweisenden Spannschraube 34 vorgesehen, die zusammen mit dem Spannschraubenschaft 34 einen Ringkanal 70 begrenzt.

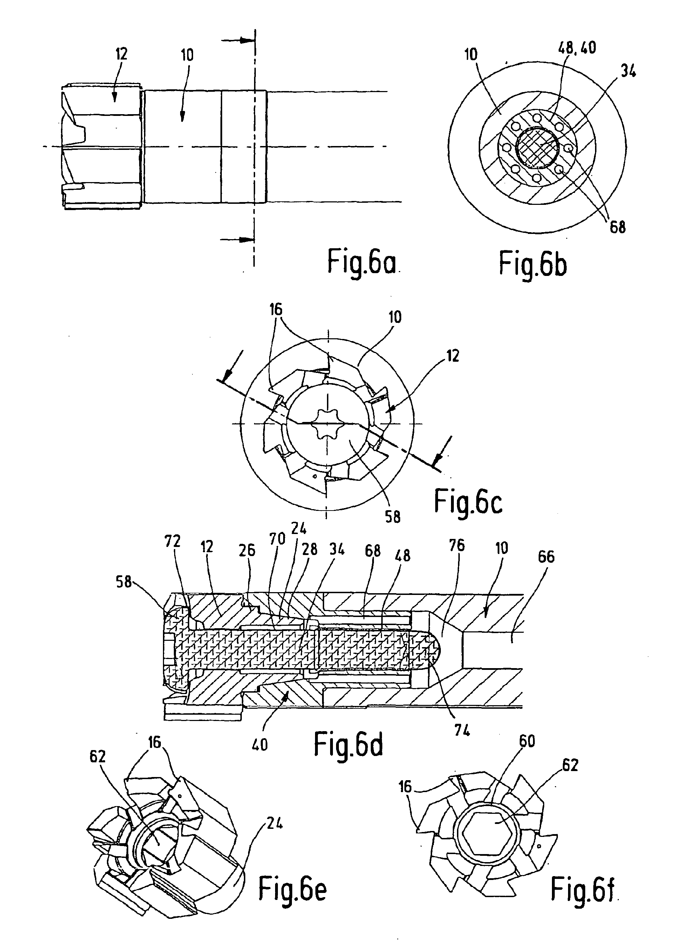

Bei den Ausführungsvarianten 5 und 6 nach Fig. 6a bis d und 7a und b befindet sich im Wechselschneidkopf 12 eine Sechskantöffnung (vgl. Fig. 6e und f), durch welchen die Spannschraube 34 mit ihrem Schaft hindurchgreift (vgl. Fig. 6d und 7b). Auch dort verbleibt in den Sechskantecken eine Durchgangsöffnung für den Kühlmitteldurchtritt zum Schraubenkopf und zu den Austrittsöffnungen 72.

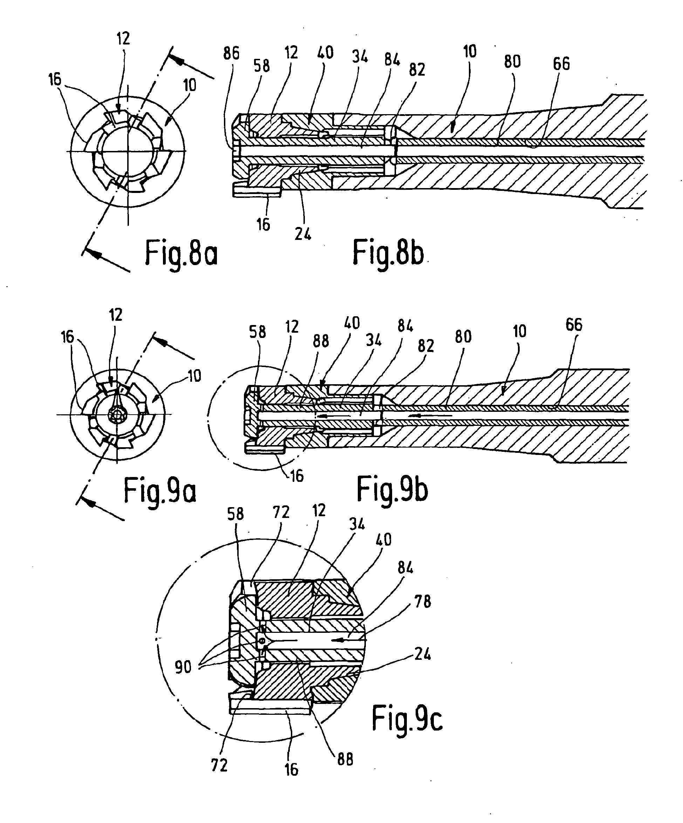

Bei den Ausführungsvarianten 7 bis 9 nach den Fig. 8, 9 und 10 ist die grundkörperseitige Kühlmittelbohrung 66 mit einem Kühlmittelrohr 80 bestückt, das an seiner innen liegenden Stirnseite über einen Dichtring 82 an einen Zentralkanal 84 der Spannschraube 34 angeschlossen ist und mit diesem kommuniziert. Der Strömungsquerschnitt des Kühlmittelrohrs 80 und des Zentralkanals 84 sind dabei gleich groß, so dass ein glatter Übergang gewährleistet ist. Dies ist vor allem für die Minimalmengenschmierung von Bedeutung.

Im Falle des Ausführungsbeispiels nach Fig. 8a und b mündet der Zentralkanal 84 in eine den Schraubenkopf 58 achszentral durchdringende Austrittsöffnung 86.

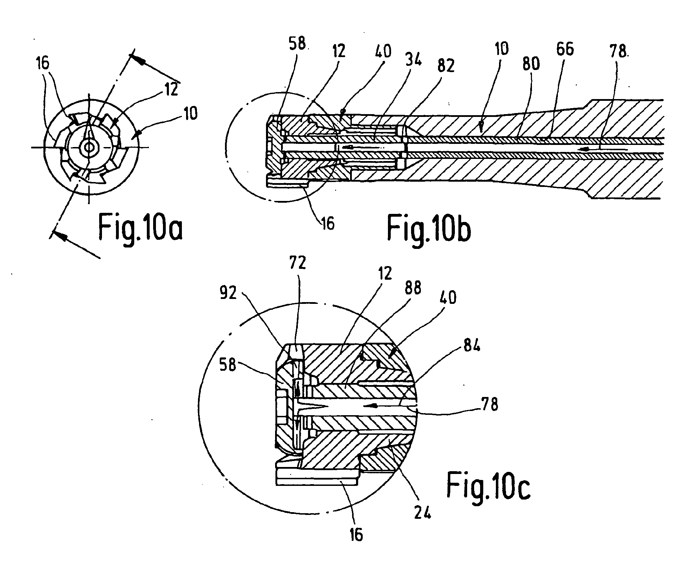

Die Ausführungsvarianten nach Fig. 9 und 10 unterscheiden sich von der Ausführungsvariante nach Fig. 8 dadurch, dass die Austrittsöffnungen 72 dort im Wesentlichen radial nach außen gerichtet sind und zu den Schneidzähnen 16 des Wechselschneidkopfs 12 weisen. Im Falle der Ausführungsvariante nach Fig. 9a bis c kommunizieren die Austrittsöffnungen 72 über Radialkanäle 90 im Schaft 88 der Spannschraube 34 und im Falle der Fig. 10a bis c über Radialkanäle 92 im Schraubenkopf 58 mit dem Zentralkanal 84.

## Patentansprüche

1. Maschinenwerkzeug, insbesondere Maschinenreibahle, mit einem schaftartigen Grundkörper (10) und einem stirnseitig über den Grundkörper überstehenden Wechselschneidkopf (!2), der mit einem axial überstehenden Ansatz (24) in eine stirnseitige, grundkörperfeste Aufnahme (14) eingreift und dort mittels einer achszentral durch den Wechselschneidkopf (12) hindurchgreifenden Spannschraube (34) lösbar eingespannt ist, wobei die Spannschraube (34) einen gegen eine Stirnfläche (60) des Wechselschneidkopfs (12) anliegenden Schraubkopf (58) aufweist und in ein zentrales grundkörperfestes Innengewinde (38) eingedreht ist und wobei der Ansatz (24) des Wechselschneidkopfs (12) eine durch eine achszentrale grundkörperfeste Mehrkantöffnung (25) hindurchgreifende, hierzu komplementäre Mehrkantpartie (26) aufweist, **dadurch gekennzeichnet, dass** der Grundkörper (10) einen das Innengewinde (38) sowie die Mehrkantöffnung (25) und/oder eine Konusöffnung (27) enthaltenden Funktionseinsatz (40) aufweist, dass der Grundkörper (10) eine achszentrale Kühlmittelbohrung (66) aufweist, dass der Funktionseinsatz (40) im Bereich eines Pass- oder Gewindezapfens (48) Kühlmittelkanäle (68) begrenzt, die außerhalb des Innengewindes (38) angeordnet sind und mit der grundkörperseitigen Kühlmittelbohrung (66) kommunizieren, dass im Bereich des in den Funktionseinsatz (40) eingreifenden Teils des Wechselschneidkopfs (12) durch den Wechselschneidkopf (12) und/oder die Spannschraube (34) begrenzte Kühlmittelkanäle (70) angeordnet sind, die mit den pass- oder gewindezapfenseitigen Kühlmittelkanälen (68) kommunizieren, und dass die wechselschneidkopfseitigen Kühlmittelkanäle (70) im Bereich des Schraubkopfes (58) in zu den Schneiden (16) des Wechselschneidkopfes (12) weisende Austrittsöffnungen (72) münden.

2. Maschinenwerkzeug nach Anspruch 1, **dadurch gekennzeichnet, dass** der Ansatz (24) eine an die Mehrkantpartie (26) anschließende, in die grundkörperfeste Konusöffnung (27) eingreifende, hierzu komplementäre Außenkonuspartie (28) aufweist.

3. Maschinenwerkzeug nach Anspruch 2, **dadurch gekennzeichnet, dass** die Außenkonuspartie (28) über eine Ringstufe (30) von der Mehrkantpartie (26) getrennt ist.

4. Maschinenwerkzeug nach Anspruch 3, **dadurch gekennzeichnet, dass** die Konusöffnung (27) über eine zur genannten Ringstufe (30) komplementäre Ringstufe (32) von der Mehrkantöffnung (25) getrennt ist.

5. Maschinenwerkzeug nach einem der Ansprüche 1 bis 4, **dadurch gekennzeichnet, dass** der Funktionseinsatz (40) starr mit dem Grundkörper (10) verbunden, vorzugsweise in einer grundkörperseitigen Aufnahme (42) eingeschrumpft oder angeschraubt ist.

6. Maschinenwerkzeug nach einem der Ansprüche 1 bis 5, **dadurch gekennzeichnet, dass** der Funktionseinsatz (40) mit dem Grundkörper (10) materialschlüssig verbunden, vorzugsweise in eine grundkörperseitige Aufnahme (42) eingelötet, eingeschweißt oder eingeklebt ist.

7. Maschinenwerkzeug nach einem der Ansprüche 1 bis 6, **dadurch gekennzeichnet, dass** der Grundkörper (10) eine achszentrale Passbohrung (44) für einen am Funktionseinsatz (40) über eine Ringschulter (46) achszentral überstehenden Passzapfen (48) aufweist.

8. Maschinenwerkzeug nach einem der Ansprüche 1 bis 6, **dadurch gekennzeichnet, dass** der Grundkörper (10) eine achszentrale Gewindebohrung für einen am Funktionseinsatz (40) über eine Ringschulter (46) achszentral überstehenden Gewindezapfen aufweist.

9. Maschinenwerkzeug nach Anspruch 7 oder 8, **dadurch gekennzeichnet, dass** der Funktionseinsatz (40) mit seiner Planfläche (22) gegen eine die Aufnahme (42) begrenzende stirnseitige Ringfläche (52) des Grundkörpers (10) anliegt.

10. Maschinenwerkzeug nach einem der Ansprüche 7 bis 9, **dadurch gekennzeichnet, dass** das Innengewinde (38) innerhalb des Pass- oder Gewindezapfens (48) angeordnet ist.

11. Maschinenwerkzeug nach einem der Ansprüche 7 bis 10, **dadurch gekennzeichnet, dass** die Mehrkantöffnung (25) und/oder die Konusöffnung (27) axial außerhalb des Pass- oder Gewindezapfens (48) angeordnet sind.

12. Maschinenwerkzeug nach einem der Ansprüche 1 bis 11, **dadurch gekennzeichnet, dass** der Funktionseinsatz (40) eine stirnseitige Ringfläche (52) aufweist, gegen welche der eingespannte Wechselschneidkopf (12) mit einer komplementären Planfläche (22) anschlägt.

13. Maschinenwerkzeug nach einem der Ansprüche 1 bis 12, **dadurch gekennzeichnet, dass** die Kühlmittelbohrung (66) und die Kühlmittelkanäle (68,70) in ihrem Verlauf einen im Wesentlichen konstanten Öffnungsquerschnitt aufweisen.

14. Maschinenwerkzeug nach einem der Ansprüche 1 bis 13, **dadurch gekennzeichnet, dass** die Spannschraube (34) mit ihrer vorzugsweise abgerundeten Spitze (74) in eine sich erweiternde Übergangsöffnung (76) zwischen der grundkörperseitigen Kühlmittelbohrung (66) und den passzapfenseitigen Kühlmittelkanälen (68) querschnittsvermindernd eingreift.

15. Maschinenwerkzeug nach einem der Ansprüche 1 bis 14, **dadurch gekennzeichnet, dass** die pass- oder gewindezapfenseitigen Kühlmittelkanäle (68) als durch den Pass- oder Gewindezapfen achsparallel hindurch greifende Bohrungen ausgebildet sind.

16. Maschinenwerkzeug nach einem der Ansprüche 1 bis 15, **dadurch gekennzeichnet, dass** die passzapfenseitigen Kühlmittelkanäle (68) als einseitig durch die Passbohrungswand begrenzte Axialnuten in der Passzapfenwand ausgebildet sind.

17. Maschinenwerkzeug, insbesondere Maschinenreibahle, mit einem schaftartigen Grundkörper (10) und einem stirnseitig über den Grundkörper überstehenden Wechselschneidkopf (!2), der mit einem axial überstehenden Ansatz (24) in eine stirnseitige, grundkörperfeste Aufnahme (14) eingreift und dort mittels einer achszentral durch den Wechselschneidkopf (12) hindurchgreifenden Spannschraube (34) lösbar eingespannt ist, wobei die Spannschraube (34) einen gegen eine Stirnfläche (60) des Wechselschneidkopfs (12) anliegenden Schraubkopf (58) aufweist und in ein zentrales grundkörperfestes Innengewinde (38) eingedreht ist und wobei der Ansatz (24) des Wechselschneidkopfs (12) eine durch eine achszentrale grundkörperfeste Mehrkantöffnung (25) hindurchgreifende, hierzu komplementäre Mehrkantpartie (26) aufweist, **dadurch gekennzeichnet, dass** der Grundkörper (10) einen das Innengewinde (38) sowie die Mehrkantöffnung (25) und/oder eine Konusöffnung (27) enthaltenden Funktionseinsatz (40) aufweist, dass der Grundkörper (10) eine achszentrale Kühlmittelbohrung (66) aufweist und dass die Spannschraube (34) einen mit der Kühlmittelbohrung (66) oder mit einem in der Kühlmittelbohrung angeordneten Kühlmittelrohr (80) kommunizierenden Zentralkanal (84) aufweist, der im Bereich des Schraubkopfes in mindestens eine Austrittsöffnung (72,86) mündet.

18. Maschinenwerkzeug nach Anspruch 17, **dadurch gekennzeichnet, dass** die Austrittsöffnung (86) achszentral im Schraubkopf angeordnet ist.

19. Maschinenwerkzeug nach Anspruch 17, **dadurch gekennzeichnet, dass** die Austrittsöffnungen (72) über Radialkanäle (90,92) mit dem Zentralkanal (84) kommunizieren.

20. Maschinenwerkzeug nach Anspruch 19, **dadurch gekennzeichnet, dass** die Radialkanäle (90) durch den Schaft (88) der Spannschraube (34) hindurchgreifen.

21. Maschinenwerkzeug nach Anspruch 19, **dadurch gekennzeichnet, dass** die Radialkanäle (92) durch den Schraubkopf (58) hindurchgreifen.

22. Maschinenwerkzeug nach einem der Ansprüche 17 bis 21, **dadurch gekennzeichnet, dass** die mindestens eine Austrittsöffnung (86,72) zu den Schneiden (16) des Wechselschneidkopfs (12) weisen.

23. Maschinenwerkzeug nach einem der Ansprüche 17 bis 22, **dadurch gekennzeichnet, dass** die Kühlmittelbohrung (66) des Grundkörpers (10) mit einem mit dem Zentralkanal (86) der Spannschraube (34) kommunizierenden Kühlmittelrohr (80) bestückt ist.

24. Maschinenwerkzeug nach einem der Ansprüche 17 bis 23, **dadurch gekennzeichnet, dass** die Spannschraube (34) mit ihrem Zentralkanal (84) über einen Dichtring (82) an die Kühlmittelbohrung (66) oder an das Kühlmittelrohr (80) anschließt.

## Claims

1. A machine tool, in particular a machine reamer, having a shank-like basic body (10) and an interchangeable cutting head (12) which projects beyond the basic body at the front end, engages by means of an axially projecting extension (24) in a front-end receptacle (14) fixed in relation to the basic body and is releasably clamped in place there by means of a clamping screw (34) passing axially centrally through the interchangeable cutting head (12), the clamping screw (34) having a screw head (58) which bears against an end face (60) of the interchangeable cutting head (12) and being screwed into a central internal thread (38) fixed in relation to the basic body, and the extension (24) of the interchangeable cutting head (12) having a polygonal portion (26) passing through an axially central polygonal opening (25), fixed in relation to the basic body, and complementary to said polygonal opening (25), **characterized in that** the basic body (10) has a functional insert (40) containing the internal thread (38) and the polygonal opening (25) and/or a tapered opening (27), **in that** the basic body (10) has an axially central coolant bore (66), **in that** the functional insert (40), in the region of a mating or threaded pin (48), defines coolant passages (68) which are arranged outside the internal thread (38) and communicate with the coolant bore (66) on the basic body side, **in that** coolant passages (70) defined by the interchangeable cutting head (12) and/or the clamping screw (34) are arranged in the region of that part of the interchangeable cutting head (12) which engages in the functional insert (40), said coolant passages (70) communicating with the coolant passages (68) on the mating or threaded pin side, and **in that** the coolant passages (70) on the interchangeable cutting head side, in the region of the screw head (58), open into outlet openings (72) pointing toward the cutting edges (16) of the interchangeable cutting head (12).

2. The machine tool as claimed in claim 1, **characterized in that** the extension (24) has an externally tapered portion (28) which adjoins the polygonal portion (26), engages in the tapered opening (27), fixed in relation to the basic body, and is complementary thereto.

3. The machine tool as claimed in claim 2, **characterized in that** the externally tapered portion (28) is separated from the polygonal portion (26) via an annular step (30).

4. The machine tool as claimed in claim 3, **characterized in that** the tapered opening (27) is separated from the polygonal opening (25) via an annular step (32) complementary to said annular step (30).

5. The machine tool as claimed in one of claims 1 to 4, **characterized in that** the functional insert (40) is rigidly connected to the basic body (10), preferably shrunk in place or screwed on in a receptacle (42) on the basic body side.

6. The machine tool as claimed in one of claims 1 to 5, **characterized in that** the functional insert (40) is connected to the basic body (10) in an integral manner, preferably brazed, welded or adhesively bonded in place in a receptacle (42) on the basic body side.

7. The machine tool as claimed in one of claims 1 to 6, **characterized in that** the basic body (10) has an axially central mating hole (44) for a mating pin (48) projecting axially centrally on the functional insert (40) beyond an annular shoulder (46).

8. The machine tool as claimed in one of claims 1 to 6, **characterized in that** the basic body (10) has an axially central tapped hole for a threaded pin projecting axially centrally on the functional insert (40) beyond the annular shoulder (46).

9. The machine tool as claimed in claim 7 or 8, **characterized in that** the functional insert (40) bears with its flat face (22) against a front-end annular surface (52), defining the receptacle (42), of the basic body (10).

10. The machine tool as claimed in one of claims 7 to 9, **characterized in that** the internal thread (38) is arranged inside the mating or threaded pin (48).

11. The machine tool as claimed in one of claims 7 to 10, **characterized in that** the polygonal opening (25) and/or the tapered opening (27) are/is arranged axially outside the mating or threaded pin (48).

12. The machine tool as claimed in one of claims 1 to 11, **characterized in that** the functional insert (40) has a front-end annular surface (52), against which a complementary flat face (22) of the clamped interchangeable cutting head (12) abuts.

13. The machine tool as claimed in one of claims 1 to 12, **characterized in that** the coolant bore (66) and the coolant passages (68, 70) have in their continuation an essentially constant opening cross section.

14. The machine tool as claimed in one of claims 1 to 13, **characterized in that** the preferably rounded point (74) of the clamping screw (34) engages, in such a way as to reduce the cross section, in a widening transition opening (76) between the coolant bore (66) on the basic body side and the coolant passages (68) on the mating pin side.

15. The machine tool as claimed in one of claims 1 to 14, **characterized in that** the coolant passages (68) on the mating or threaded pin side are designed as bores passing through the mating or threaded pin in an axially parallel manner.

16. The machine tool as claimed in claims 1 to 15, **characterized in that** the coolant passages (68) on the mating pin side are designed as axial grooves, defined on one side by the mating hole wall, in the mating pin wall.

17. A machine tool, in particular a machine reamer, having a shank-like basic body (10) and an interchangeable cutting head (12) which projects beyond the basic body at the front end, engages by means of an axially projecting extension (24) in a front-end receptacle (14) fixed in relation to the basic body and is releasably clamped in place there by means of a clamping screw (34) passing axially centrally through the interchangeable cutting head (12), the clamping screw (34) having a screw head (58) which bears against an end face (60) of the interchangeable cutting head (12) and being screwed into a central internal thread (38) fixed in relation to the basic body, and the extension (24) of the interchangeable cutting head (12) having a polygonal portion (26) passing through an axially central polygonal opening (25), fixed in relation to the basic body, and complementary to said polygonal opening (25), **characterized in that** the basic body (10) has a functional insert (40) containing the internal thread (38) and the polygonal opening (25) and/or a tapered opening (27), **in that** the basic body (10) has an axially central coolant bore (66), and **in that** the clamping screw (34) has a central passage (84) which communicates with the coolant bore (66) or with a coolant tube (80) arranged in the coolant bore and opens in the region of the screw head into at least one outlet opening (72, 86).

18. The machine tool as claimed in claim 17, **characterized in that** the outlet opening (86) is arranged in the screw head in an axially central manner.

19. The machine tool as claimed in claim 17, **characterized in that** the outlet openings (72) communicate with the central passage (84) via radial passages (90, 92).

20. The machine tool as claimed in claim 19, **characterized in that** the radial passages (90) pass through the shank (88) of the clamping screw (34).

21. The machine tool as claimed in claim 19, **characterized in that** the radial passages (92) pass through the screw head (58).

22. The machine tool as claimed in one of claims 17 to 21, **characterized in that** the at least one outlet opening (86, 72) points toward the cutting edges (16) of the interchangeable cutting head (12).

23. The machine tool as claimed in one of claims 17 to 22, **characterized in that** the coolant bore (66) of the basic body (10) is fitted with a coolant tube (80) communicating with the central passage (86) of the clamping screw (34).

24. The machine tool as claimed in one of claims 17 to 23, **characterized in that** the clamping screw (34), with its central passage (84), adjoins the coolant bore (66) or the coolant tube (80) via a sealing ring (82).

## Revendications

1. Outil de machine, notamment alésoir d'usinage, comprenant un corps de base (10) du type fût et une tête de coupe interchangeable (12) qui fait frontalement saillie au-delà dudit corps de base et pénètre, par un appendice (24) dépassant axialement, dans un logement frontal (14) verrouillé au corps de base, et dans lequel ladite tête est abloquée amoviblement au moyen d'une vis de serrage (34) traversant axialement, en son centre, ladite tête de coupe interchangeable (12), sachant que la vis de serrage (34) offre une tête (58) appliquée contre une face frontale (60) de la tête de coupe interchangeable (12), et est vissée dans un taraudage central (38) solidaire du corps de base, et sachant que l'appendice (24) de ladite tête de coupe interchangeable (12) présente une partie (26) à pans multiples qui traverse, avec complémentarité, un orifice (25) à pans multiples pratiqué axialement au centre et solidaire du corps de base, **caractérisé par le fait que** le corps de base (10) comporte une pièce fonctionnelle intégrée (40) englobant le taraudage (38), ainsi que l'orifice (25) à pans multiples et/ou un orifice tronconique (27) ; **par le fait que** ledit corps de base (10) présente un alésage (66) à fluide de refroidissement, pratiqué axialement au centre ; **par le fait que** la pièce fonctionnelle intégrée (40) délimite, dans la région d'un tenon (48) d'adaptation ou de vissage, des canaux (68) à fluide de refroidissement qui sont situés à l'extérieur du taraudage (38) et communiquent avec l'alésage (66) à fluide de refroidissement situé du côté du corps de base ; **par le fait que** des canaux (70) à fluide de refroidissement, délimités par la tête de coupe interchangeable (12) et/ou par la vis de serrage (34) dans la région de la partie de ladite tête de coupe interchangeable (12) qui s'engage dans la pièce fonctionnelle intégrée (40), communiquent avec les canaux (68) à fluide de refroidissement situés du côté du tenon d'adaptation ou de vissage ; et **par le fait que** les canaux (70) à fluide de refroidissement situés du côté de la tête de coupe interchangeable débouchent, dans la région de la tête (58) de la vis, dans des orifices de sortie (72) pointant vers les tranchants (16) de ladite tête de coupe interchangeable (12).

2. Outil de machine, selon la revendication 1, **caractérisé par le fait que** l'appendice (24) est muni d'une partie tronconique extérieure (28) située dans la continuité directe de la partie (26) à pans multiples et pénétrant, avec complémentarité, dans l'orifice tronconique (27) solidaire du corps de base.

3. Outil de machine, selon la revendication 2, **caractérisé par le fait que** la partie tronconique extérieure (28) est séparée, par l'intermédiaire d'un gradin annulaire (30), d'avec la partie (26) à pans multiples.

4. Outil de machine, selon la revendication 3, **caractérisé par le fait que** l'orifice tronconique (27) est séparé, d'avec l'orifice (25) à pans multiples, par l'intermédiaire d'un gradin annulaire (32) complémentaire du gradin annulaire précité (30).

5. Outil de machine, selon l'une des revendications 1 à 4, **caractérisé par le fait que** la pièce fonctionnelle intégrée (40) est reliée rigidement au corps de base (10), en étant de préférence emmanchée à force, ou rapportée par vissage, dans un logement (42) situé dudit côté du corps de base.

6. Outil de machine, selon l'une des revendications 1 à 5, **caractérisé par le fait que** la pièce fonctionnelle intégrée (40) est reliée matériellement au corps de base (10) en étant, de préférence, brasée, soudée ou collée dans un logement (42) situé du côté dudit corps de base.

7. Outil de machine, selon l'une des revendications 1 à 6, **caractérisé par le fait que** le corps de base (10) présente un alésage d'adaptation (44) occupant une position axialement centrale et dédié à un tenon d'adaptation (48) saillant axialement, au centre de la pièce fonctionnelle intégrée (40), par l'intermédiaire d'un épaulement annulaire (46).

8. Outil de machine, selon l'une des revendications 1 à 6, **caractérisé par le fait que** le corps de base (10) présente un taraudage occupant une position axialement centrale et dédié à un tenon de vissage saillant axialement, au centre de la pièce fonctionnelle intégrée (40), par l'intermédiaire d'un épaulement annulaire (46).

9. Outil de machine, selon la revendication 7 ou 8, **caractérisé par le fait que** la pièce fonctionnelle intégrée (40) porte, par sa surface plane (22), contre une surface annulaire frontale (52) du corps de base (10) qui délimite le logement (42).

10. Outil de machine, selon l'une des revendications 7 à 9, **caractérisé par le fait que** le taraudage (38) est pratiqué à l'intérieur du tenon (48) d'adaptation ou de vissage.

11. Outil de machine, selon l'une des revendications 7 à 10, **caractérisé par le fait que** l'orifice (25) à pans multiples, et/ou l'orifice tronconique (27), se trouve(nt) axialement à l'extérieur du tenon (48) d'adaptation ou de vissage.

12. Outil de machine, selon l'une des revendications 1 à 11, **caractérisé par le fait que** la pièce fonctionnelle intégrée (40) présente une surface annulaire frontale (52), contre laquelle la tête de coupe interchangeable (12) enserrée vient buter par une surface plane (22) complémentaire.

13. Outil de machine, selon l'une des revendications 1 à 12, **caractérisé par le fait que** l'alésage (66) à fluide de refroidissement et les canaux (68, 70) à fluide de refroidissement présentent, sur leur tracé, une section transversale d'ouverture sensiblement constante.

14. Outil de machine, selon l'une des revendications 1 à 13, **caractérisé par le fait que** la vis de serrage (34) s'engage avec effet de diminution de section transversale, par sa pointe (74) de préférence arrondie, dans un orifice de transition (76) s'élargissant entre l'alésage (66) à fluide de refroidissement, situé du côté du corps de base, et les canaux (68) à fluide de refroidissement situés du côté du tenon d'adaptation.

15. Outil de machine, selon l'une des revendications 1 à 14, **caractérisé par le fait que** les canaux (68) à fluide de refroidissement, situés du côté du tenon d'adaptation ou de vissage, sont réalisés sous la forme de perçages traversant, avec parallélisme axial, ledit tenon d'adaptation ou de vissage.

16. Outil de machine, selon l'une des revendications 1 à 15, **caractérisé par le fait que** les canaux (68) à fluide de refroidissement, situés du côté du tenon d'adaptation, sont réalisés sous la forme de rainures axiales façonnées dans la paroi dudit tenon d'adaptation et délimitées, unilatéralement, par la paroi de l'orifice d'adaptation.

17. Outil de machine, notamment alésoir d'usinage, comprenant un corps de base (10) du type fût et une tête de coupe interchangeable (12) qui fait frontalement saillie au-delà dudit corps de base et pénètre, par un appendice (24) dépassant axialement, dans un logement frontal (14) verrouillé au corps de base, et dans lequel ladite tête est abloquée amoviblement au moyen d'une vis de serrage (34) traversant axialement, en son centre, ladite tête de coupe interchangeable (12), sachant que la vis de serrage (34) offre une tête (58) appliquée contre une face frontale (60) de la tête de coupe interchangeable (12), et est vissée dans un taraudage central (38) solidaire du corps de base, et sachant que l'appendice (24) de ladite tête de coupe interchangeable (12) présente une partie (26) à pans multiples qui traverse, avec complémentarité, un orifice (25) à pans multiples pratiqué axialement au centre et solidaire du corps de base, **caractérisé par le fait que** le corps de base (10) comporte une pièce fonctionnelle intégrée (40) englobant le taraudage (38), ainsi que l'orifice (25) à pans multiples et/ou un orifice tronconique (27) ; **par le fait que** ledit corps de base (10) présente un alésage (66) à fluide de refroidissement, pratiqué axialement au centre ; et **par le fait que** la vis de serrage (34) offre un canal central (84) qui communique avec l'alésage (66) à fluide de refroidissement ou avec un tube (80) à fluide de refroidissement disposé dans ledit alésage à fluide de refroidissement, et qui débouche dans au moins un orifice de sortie (72, 86) dans la région de la tête de ladite vis.

18. Outil de machine, selon la revendication 17, **caractérisé par le fait que** l'orifice de sortie (86) occupe une position axialement centrale dans la tête de la vis.

19. Outil de machine, selon la revendication 17, **caractérisé par le fait que** les orifices de sortie (72) communiquent avec le canal central (84) par l'entremise de canaux radiaux (90, 92).

20. Outil de machine, selon la revendication 19, **caractérisé par le fait que** les canaux radiaux (90) traversent la tige (88) de la vis de serrage (34).

21. Outil de machine, selon la revendication 19, **caractérisé par le fait que** les canaux radiaux (92) traversent la tête (58) de la vis.

22. Outil de machine, selon l'une des revendications 17 à 21, **caractérisé par le fait que** l'orifice de sortie (86, 72), prévu au minimum, pointe vers les tranchants (16) de la tête de coupe interchangeable (12).

23. Outil de machine, selon l'une des revendications 17 à 22, **caractérisé par le fait que** l'alésage (66) à fluide de refroidissement du corps de base (10) est garni d'un tube (80) à fluide de refroidissement, communiquant avec le canal central (86) de la vis de serrage (34).

24. Outil de machine, selon l'une des revendications 17 à 23, **caractérisé par le fait que** la vis de serrage (34) se rattache directement à l'alésage (66) à fluide de refroidissement ou au tube (80) à fluide de refroidissement, par son canal central (84), avec interposition d'une bague d'étanchement (82).
